Europäisches Patentamt

European Patent Office

Office européen des brevets

(11) Veröffentlichungsnummer: **0 413 849 A1**

# (12) EUROPÄISCHE PATENTANMELDUNG

(21) Anmeldenummer: 89115738.0

(22) Anmeldetag: 25.08.89

(51) Int. Cl.5: **H02K 23/66**, H02K 11/00

(43) Veröffentlichungstag der Anmeldung:
**27.02.91 Patentblatt 91/09**

(84) Benannte Vertragsstaaten:
**DE ES FR GB**

(71) Anmelder: **Siemens Aktiengesellschaft
Wittelsbacherplatz 2
D-8000 München 2(DE)**

(72) Erfinder: **Hofmann, Manfred
Friedenstrasse 11a
D-8702 Hettstadt(DE)**

(54) **Dreherkennungsvorrichtung für einen durch Teilschalenmagnete oder Einzelerregerpole erregten Kommutatormotor.**

(57) Um bei einer Dreherkennungsvorrichtung mit auf einem Tragkörper (31) zwischen den Pollücken statorseitiger Teilschalenmagnete (6,7) gehaltener Meßspule (4) eine montageeinfache und dauerbetriebssichere Kontaktierung zwischen den Wicklungsenden (41) der Meßspule (4) und an der Bürstenbrücke des Kommutatormotors gehaltenen Anschlußlitzen (32) gewährleisten zu können, sind erfindungsgemäß der Tragkörper (31) als einstückiger Teil einer, insbesondere aus Kunststoff spritzgegossenen, Universal-Bürstenbrücke (3) ausgebildet und die Meßspule (4) und deren mit abisolierten Enden der Anschlußlitzen (32) verbundenen Wicklungsenden (41) als Einlegeteile in die Universal-Bürstenbrücke (3) eingegossen.

FIG 3

FIG 1

EP 0 413 849 A1

# DREHERKENNUNGSVORICHTUNG FÜR EINEN DURCH TEILSCHALENMAGNETE ODER EINZELERREGER-POLE ERREGTEN KOMMUTATORMOTOR

Die Erfindung bezieht sich auf eine Dreherkennungsvorichtung für einen durch Teilschalenmagnete oder Einzelerregerpole erregten Kommutatormotor gemäß Oberbegriff des Anspruchs 1; eine derartige Dreherkennungvorichtung ist durch die EP-Al-0 307 709 bekannt.

Im bekannten Fall der EP-Al-0 307 709 ist zur Drehzahlerkennung in zumindest einer Pollücke zwischen den Teilschalenmagneten bzw. Einzelerregerpolen eine durch die bei Drehung des Rotors nutfrequente Pulsation des Streufeldes induzierbare Meßspule angeordnet, die in einem zwischen die Teilschalenmagnete bzw. Einzelpole einsetzbaren unmagnetischen Tragkörper, insbesondere einem Kunststoff-Tragkörper, gehalten sind. Die Meßspule umschlingt einen Induktions-Eisenkern, dessen tangentiale Erstreckung vorzugsweise kleiner ist als die Nutschlitz- bzw. Zahnlückenbreite des genuteten bzw. gezahnten Rotors. Die Meßspule und/oder der Induktions-Eisenkern sind in Taschen des Tragkörpers eingesteckt und, vorzugsweise durch einen Rastverschluß, in diesen Taschen gehalten. Der Tragkörper weist zum Anschluß äußerer Anschlußleitungen Meßspulenanschlüsse auf, deren innere Enden mit der Meßspule verbunden sind, und deren äußere Meßspulenanschlüsse des als diskretes Bauteil ausgeführten Tragkörpers bei der Montage des Kommutatormotors mit korrespondierenden Gegensteckeranschlüssen für Bürstenbrücken-Anschlußlitzen auf einer ebenfalls als diskretes Bauteil ausgeführten und montierten Bürstenbrücke kontaktierbar sind.

Eine Dreherkennungsvorrichtung mit einfacherer Montage- und sicherer Kontaktierungsmöglichkeit zwischen den Wicklungsenden der Meßspule einerseits und an der Bürstenbrücke des Kommutatormotors gehaltenen Anschlußlitzen andererseits kann nach der Erfindung dadurch erreicht werden, daß der die Meßspule aufnehmende Tragkörper einstückiger Teil einer, insbesondere aus Kunststoff spritzgegossenen, Universal-Bürstenbrücke ist, so daß diese Bauteile in einem Montagevorgang und mit am gemeinsamen Aufnahmeteil sicher vorkontaktierbarer Verbindung zwischen den Wicklungsenden der Meßspule und den Anschlußlitzen zwischen die Pollücke einsetzbar ist. In fertigungstechnisch aufwandsarmer und eine einfache und trotzdem sichere Kontaktierung ermöglichender Weise sind die Meßspule und/oder ein der Meßspule zugeordneter Meßspulen-Induktionskern und die Meßspulenwicklungsenden und die von diesen zur Kontaktierung umwickelten und gegebenenfalls verlöteten abisolierten Enden der inneren Anschlußlitzen als Einlegeteil in der Universal-Bürstenbrücke gegenseitig isolierend eingegossen.

Die Erfindung wird im folgenden anhand eines schematisch dargestellten Ausführungsbeispiels in der Zeichnung näher erläutert; darin zeigen:

FIG 1 in einem Teillängsschnittbild einen Kommutatormotor mit einer sowohl die Bürstenapparatur als auch die Meßspulenapparatur aufnehmenden einstückigen Universal-Bürstenbrücke,

FIG 2 die Vorrichtung aus FIG 1 im Schnittbild gemäß Schnittverlauf II-II,

FIG 3 die Vorrichtung aus FIG 1 im Schnittbild gemäß Schnittverlauf III-III.

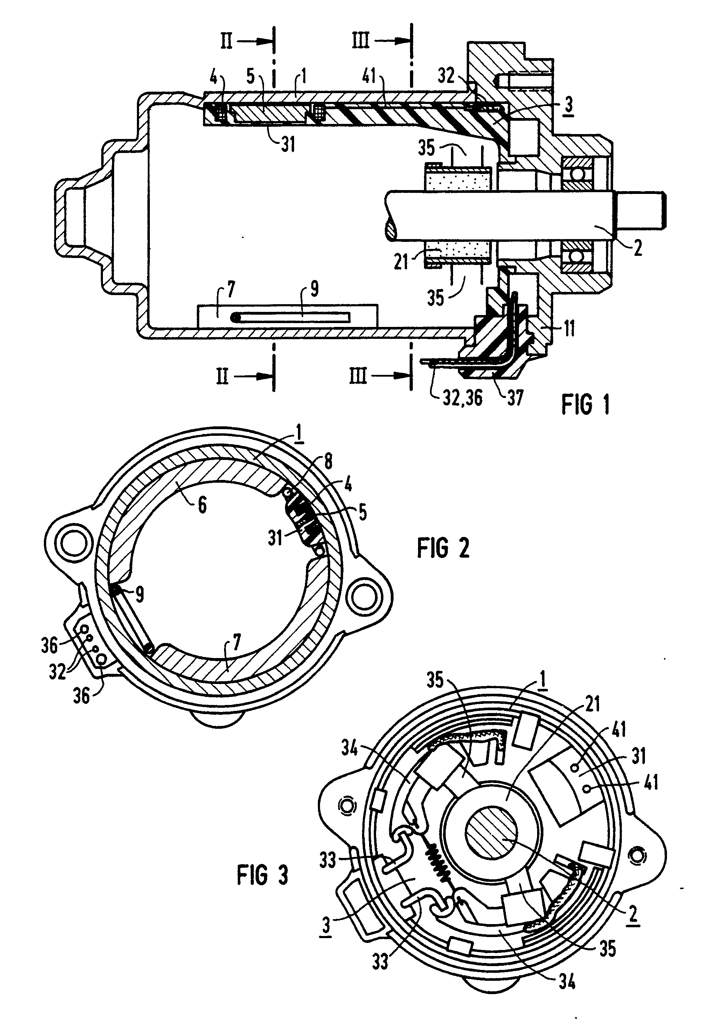

FIG 1 zeigt einen permanentmagnetisch erregten Gleichstrom-Kleinmotor mit zwei in tangentialem Abstand unter Bildung von entsprechenden Pollücken an der Innenumfangsfläche eines Statorgehäuses 1 angeordneten Teilschalenmagneten 6,7 und einem hier nur durch eine Rotorwelle 2 und einen Kommutator 21 angedeuteten Rotor mit einem genuteten, eine Rotorwicklung aufnehmenden Rotorblechpaket. Die Teilschalenmagnete 6,7 sind an der Umfangsfläche des Statorgehäuses 1 mittels in die Pollücken zwischen ihren tangentialen Stirnseiten eingeschobener, zu einer axialen Motor-Stirnseite hin offener Bügelfedern 8,9 tangential gegeneinander verspannt.

In den inneren tangentialen Zwischenraum einer Bügelfeder 8 ist - wie insbes. aus FIG 2 ersichtlich - ein eine Meßspule 4 und einen von dieser umschlungenen Meßspulen-Induktionskern 5 aufnehmender Kunststoff-Tragkörper 31 angeordnet; der Kunststoff-Tragkörper 31 ist - wie insbes. aus FIG 1 ersichtlich -einstückiger Bestandteil einer Universal-Bürstenbrücke 3, die an der rechten Stirnseite des Statorgehäuses 1 zwischen diesem und einem gegenliegenden Lagerschild 11 als Bürstenplatte mit einem radialen, in die eine Pollücke ragenden und den Kunststoff-Tragkörper 31 integrierenden vorstehenden Teil zwischengelegt ist und u.a. Halterungen 33,33 zum Einhängen von Hammerbürstenhaltern 3434 mit an deren freien Enden befestigten, auf der Oberfläche des Kommutators 21 schleifenden Bürsten 35,35 aufweist.

Die Universal-Bürstenbrücke 3 mit dem einstückig angespritzten Kunststoff-Tragkörper 31 ist in vorteilhafter Weise als Vormontageteil bereits mit der Meßspule 4 und dem Meßspulen-Induktionskern 5 und sämtlichen statorseitigen Bürstenbauteilen bestückt und weist bereits sämtliche internen elektrischen Verbindungen auf, deren äußerer Anschluß durch mittels einer dichtenden Durchführung 37 herausgeführter äußerer Anschlußlitzen 32,36 erfolgt, von diesen sind die Anschlußlitzen 32 als Meßleitung an die Wicklungsenden 41 der Meßspule 4 angeschlossen und dienen die Anschlußlitzen 36 der Spannungsversorgung der Motorwicklung des Kommutatormotors.

Die Anschlüsse der Meßspule 4 sind in Form von Wicklungsenden 41 innerhalb der Universal-Bürstenbrücke 3 an die Anschlußlitzen 32 angeschlossen, die entweder zu einer internen Dreherkennungsschaltung bzw. -steuerung auf der Universal-Bürstenbrücke 3 selbst oder - wie im vorliegenden Fall - nach außen zu einer externen Schaltung bzw. Steuerung führen.

Zur einfachen und sicheren Kontaktierung zwischen den Meßspulendrahtenden 41,41 und den deren Signal weiterführenden Anschlußlitzen 32 sind die Wicklungsenden 41 der Meßspule 4 um die abisolierten Enden der inneren Anschlußlitzen 32 gewickelt, gegebenenfalls mit diesen verlötet, und in vorteilhafter Weise als Einlegeteil in der Universal-Bürstenbrücke 3 gegeneinander isolierend eingegossen.

**Ansprüche**

1. Dreherkennungsvorrichtung für einen durch Teilschalenmagnete (6,7) oder Einzelerregerpole erregten Kommutatormotor mit in zumindest einer Pollücke zwischen den Teilschalenmagneten (6,7) oder Einzelerregerpolen auf einem Tragkörper (31), insbesondere einem Kunststoff-Tragkörper, angeordneter Meßspule (4), deren Wicklungsanschlüsse mit an der Bürstenbrücke des Kommutators gehaltenen Anschlußlitzen (32) verbunden sind, **dadurch gekennzeichnet**, daß der die Meßspule (4) aufnehmende Tragkörper (31) einstückiger Teil einer, insbesondere aus Kunststoff spritzgegossenen, Universal-Bürstenbrücke (3) ist.

2. Dreherkennungsvorrichtung nach Anspruch 1, **dadurch gekennzeichnet**, daß die Meßspule (4) und/oder ein der Meßspule (4) zugeordneter Meßspulen-Induktionskern (5) als Einlegeteil in die Universal-Bürstenbrücke (3) eingegossen ist.

3. Dreherkennungsvorrichtung nach Anspruch 1 und/oder 2, **dadurch gekennzeichnet**, daß die Wicklungsanschlüsse (41) der Meßspule (4) um die abisolierten Enden der Anschlußlitzen (32) gewickelt und/oder mit diesen verlötet sind.

4. Dreherkennungsvorrichtung nach Anspruch 3, **dadurch gekennzeichnet**, daß die Wicklungsanschlüsse (41) der Meßspule (4) und die abisolierten Enden der Anschlußlitzen (32) als Einlegeteil in die Universal-Bürstenbrücke (3) gegenseitig isolierend eingegossen sind.

5. Dreherkennungsvorrichtung nach zumindest einem der Ansprüche 1 bis 4, **dadurch gekennzeichnet**, daß die Universal-Bürstenbrücke (3) mit der elektrisch angeschlossenen, eingegossenen Meßspule (4) als vorgefertigtes, in die Pollücke einbringbares Einschubteil ausgebildet ist.

FIG 1

FIG 2

FIG 3

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3502442 (KRESS W.)<br>* Seite 10, Zeile 8 - Seite 16, Zeile 11; Figur 1 *<br>--- | 1 | H02K23/66<br>H02K11/00 |
| A | GB-A-2039420 (HILTI)<br>* das ganze Dokument *<br>--- | 1 | |
| A | EP-A-0235443 (BLACK & DECKER INC.)<br>* Spalte 5, Zeile 24 - Spalte 13, Zeile 23; Figuren 1-22 *<br>----- | 1 | |
| | | | **RECHERCHIERTE SACHGEBIETE (Int. Cl.5)**<br><br>H02K |

Der vorliegende Recherchenbericht wurde für alle Patentansprüche erstellt

| Recherchenort | Abschlußdatum der Recherche | Prüfer |
|---|---|---|
| DEN HAAG | 16 MAERZ 1990 | LE GUAY P.A. |